# EUROPÄISCHE PATENTANMELDUNG

(11) **EP 1 081 473 A2**
(43) Veröffentlichungstag der Anmeldung: **07.03.2001**
(21) Anmeldenummer: 00118657.6
(22) Anmeldetag: 29.08.2000
(51) Int. Cl.: G01J 3/18

(54) **Optischer Spektrumanalysator**

(30) Priorität: 04.09.1999 DE 19942276
(71) Anmelder: Wavetek Wandel Goltermann Eningen GmbH & Co., 72800 Eningen u. A. (DE)
(72) Erfinder: Fuhrmann, Thomas, 72800 Eningen (DE)
(74) Vertreter: Klocke, Peter, Dipl.-Ing.

(57) **Zusammenfassung**

Spektrumanalysator mit einem optischen Gitter und einem Prisma, das mindestens eine Eintritts- und mindestens eine Austrittsfläche für die Lichtstrahlen aufweist, bei dem nach dem ersten Gitterdurchlauf das komplette aufgefächerte optische Spektrum auf das Prisma gestrahlt und das im gleichen Winkel wie das einfallende Licht zurückgestrahlte Licht einer Wellenlänge nach dem zweiten Gitterdurchlauf durch einen Spalt ausgefiltert wird, wobei die nicht für die Reflexion verwendeten Seitenflächen des Prismas derart ausgebildet sind, dass das auf diese Seitenflächen auftreffendes Licht nicht mit dem gleichen Winkel wie das einfallende Licht aus der Austrittsfläche austritt, um einen auf den Ausgangsspalt reflektierten Lichtstrahl, bei dem unerwünschte Reflexionen an den Seitenflächen des Prismas von Licht anderer Wellenlängen unterdrückt ist, zu erzeugen.

## Beschreibung

Die vorliegende Erfindung betrifft einen optischen Spektrumanalysator mit Littman-Design mit einem besonders ausgestatteten Prisma.

Optische Spektrumanalysatoren werden für hochpräzise Analysen bei vielen Anwendungen eingesetzt. Hierzu wird häufig die Littman-Anordnung verwendet, bei der die aus einem Eingangsspalt auftretende Strahlung durch eine Linse kollimiert wird und auf ein Beugungsgitter auftrifft (vergl. beispielsweise US 5 886 785). Durch die Dispersionswirkung des Gitters werden die verschiedenen spektralen Anteile der Strahlung je nach ihrer Wellenlänge in verschiedenen Winkeln abgelenkt. Nur derjenige Anteil, der genau senkrecht auf einen Spiegel, beispielsweise Prisma, trifft, wird in sich selbst zurückgeworfen und erreicht auf dem umgekehrten Wege wieder die jetzt als Ausgangsspalt wirkende Blende. Dabei ist es wichtig, dass zu dem senkrecht reflektierten gewünschten Licht einer bestimmten Wellenlänge nicht zusätzlich auch noch Licht anderer Wellenlängen reflektiert und auf den Ausgangsspalt zurückgekoppelt wird. Dies führt zu unerwünschten sogenannten Geisterabbildungen. Dieses Problem tritt immer dann auf, unabhängig vom Verhältnis der Prismenbreite zum Strahl, sobald mindestens ein Teil des Strahles auf die Seitenfläche des Prismas in einem beliebigen Winkel trifft. Je schmaler das Prisma im Vergleich zum Strahl wird, desto geringer ist der Wellenlängenabstand der Geisterbilder von der Nutzwellenlänge. Wird der Strahl im Winkel geschwenkt und trifft nicht senkrecht auf das Prisma, so trifft er möglicherweise komplett auf die Seitenflächen des Prismas. Der im Prisma mehrfach reflektierte Anteil des Strahls, der parallel zum einfallenden Strahl reflektiert wird, tritt als Geisterabbildung am Ausgangsspalt auf und kann nicht vom Lichtstrahl gewünschter Wellenlänge unterschieden werden. Dieser Effekt tritt prinzipiell bei jedem optischen Spektrumanalysator mit Umlenkprisma in Littman-Anordnung auf.

Aus der GB 416 509 wird im Zusammenhang mit Filmvorführgeräten eine Strahlteilerplatte vorgeschlagen, die aus einzelnen Stufen besteht, die jeweils einen geneigten Winkel aufweisen, so dass Streu- oder Teillicht in eine vorbestimmte Richtung reflektiert wird, die ausreichend verschieden von der Richtung des gewünschten Lichtes ist. Hierzu wird ein Nicol Prisma verwendet. In der Schrift wird darauf hingewiesen, dass in der Praxis dies immer dann erfolgt, wenn der Lichtstrahl durch optische Teile gelangt, bei denen ein geringer Abstand von den Seitenwänden gegeben ist. In dieser Veröffentlichung ist die optische Durchtrittsfläche praktisch gleich groß wie der Lichtstrahl, der hindurch tritt. Dadurch streift ein geringer Teil des Lichtes, der am Rand des Lichtstrahl läuft, die Seitenflächen der optischen Komponenten und wird dadurch gestreut. Dieses gestreute Licht läuft im Nutzlicht weiter und verringert den Kontrast des Bildes, was versucht wird, durch entsprechend ausgestaltete Prismen in eine andere Richtung zu lenken.

Es gibt bis jetzt keinen Vorschlag, wie die Geisterabbildungen insbesondere bei schräg auftreffendem Lichtstrahl auf ein optisches Prisma bei optischen Spektrumanalysatoren vermieden werden können.

Der vorliegenden Erfindung liegt die Aufgabe zugrunde, eine Möglichkeit vorzuschlagen, mit der die vorstehend erwähnten Geisterabbildungen sicher bei optischen Spektrumanalysatoren mit unterschiedlichen Auftreffwinkeln auf das Prisma vermieden werden können.

Diese Aufgabe wird erfindungsgemäß durch einen optischen Spektrumanalysator mit einem speziell ausgestalteten Prisma mit den Merkmalen des Anspruchs 1 gelöst. Weitere vorteilhafte Ausgestaltungen sind den Unteransprüchen zu entnehmen.

Gemäß der Erfindung weist der optische Spektrumanalysator in Littman-Anordnung ein Prisma auf, bei dem die nicht für die Reflexion verwendeten Seitenflächen derart ausgebildet sind, dass das auf diese Seitenflächen auftreffende Licht nicht unter dem gleichen Winkel wie das einfallende Licht aus der Austrittsfläche austritt, um einen auf den Ausgangsspalt reflektierten Prisma-Seitenflächen reflektionsfreien Lichtstrahl zu erzeugen. Bei dem Spektrumanalysator wird der komplette Lichtstrahl im Abhängigkeit der Wellenlänge im Winkel geschwenkt und trifft dadurch möglicherweise komplett und nicht nur teilweise auf die Seitenfläche des Prismas. Der Winkel ist nicht nur streifend, sondern kann in Abhängigkeit der Geometrie auch steiler sein. Nach Mehrfachreflektionen im Prisma läuft gemäß der Erfindung kein Licht ) im gleichen Winkel zurück wie das einfallende Licht. Damit ist es möglich, einen weiten Wellenlängenbereich ohne Geisterbilder mit dem optischen Spektrumanalysator zu realisieren.

Bei einer derartigen Anordnung wird das Licht einer anderen Wellenlänge, das im herkömmlichen Prisma durch die Seitenflächen zusätzlich reflektiert und ebenfalls im gleichen Winkel wie das einfallende Licht zurückgestrahlt wird, daran gehindert, im gleichen Winkel wie der Einfallswinkel zurückgestrahlt zu werden. Dies kann vorteilhafterweise in der Form erfolgen, dass die Seitenfläche aufgeraut ist, so dass das Licht diffus gestreut wird. Eine andere Möglichkeit besteht darin, eine Krümmung vorzusehen, damit das Licht nicht mehr parallel zurückreflektiert wird. Auch kann die Seitenfläche mit einem entsprechenden Winkel abgeschrägt sein, so dass das Licht nicht senkrecht reflektiert wird oder mit einer absorbierenden Schicht versehen sein.

Erst durch die erfindungsgemäße Ausgestaltung des optischen Spektrumanalysators ist es nunmehr möglich, den kompletten Lichtstrahl in Abhängigkeit der Wellenlänge im Winkel zu schwenken, ohne dass Geisterabbildungen auftreten.

Nachfolgend wird die Erfindung anhand eines Ausführungsbeispiels in Verbindung mit den begleitenden Zeichnungen näher erläutert.

Es stellen dar:
- Figur 1: eine Prinzipskizze der Littman-Anordnung mit einem Prisma als Reflexionseinrichtung;
- Figur 2: ein Prisma in perspektivischer Ansicht mit der Umlenkung des Lichtstrahles sowie die verschiedenen Funktionsweisen des Prismas in Verbindung mit den unterschiedlichen Arbeitsmodi eines optischen Spektrumanalysators und
- Figur 3: die Seitenansicht eines Prismas mit den entsprechend ausgebildeten Seitenflächen.

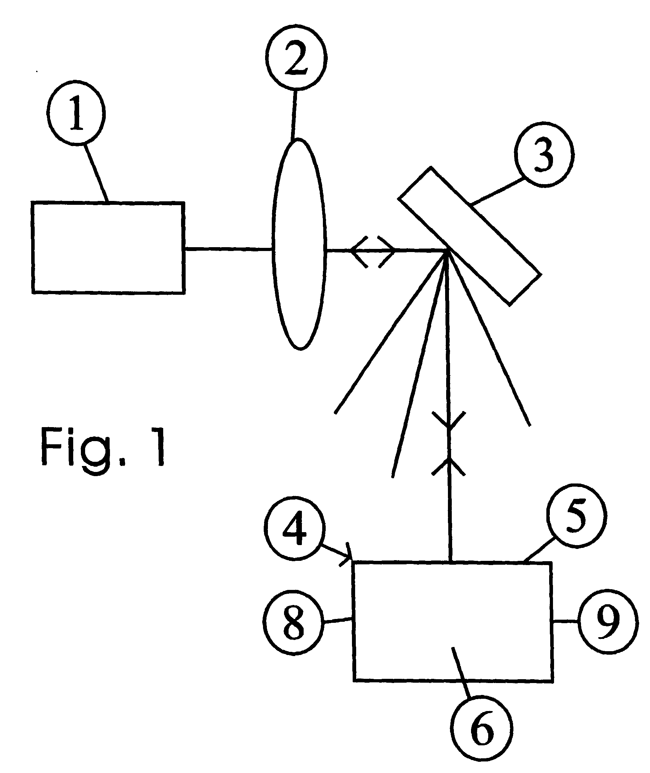

In der grundsätzlichen Anordnung nach dem Littman-Prinzip gemäß Figur 1 wird das über einen Eingangsspalt 1 eintretende Licht über die Linse 2 auf ein Gitter 3 kollimiert und der senkrecht auf das Prisma 4 auftreffende Strahl über das Gitter 3 und die Linse 2 zurück zum Eingangsspalt reflektiert. In einer anderen Ausbildung kann der zurückreflektierte Strahl auch auf einen gesonderten Ausgangsspalt treffen (vergl. FIBER OPTIC TEST AND MEASUREMENT from Dennis Derickson, Editor, HEWLETT-PACKARD Professional Books 1998, S. 87ff). Die einzelnen Komponenten eines derartigen optischen Spektrumanalysators, die für eine Wellenlängenmessung erforderlich sind, sind dem Fachmann bekannt und in dem vorstehend erwähnten Buch angegeben.

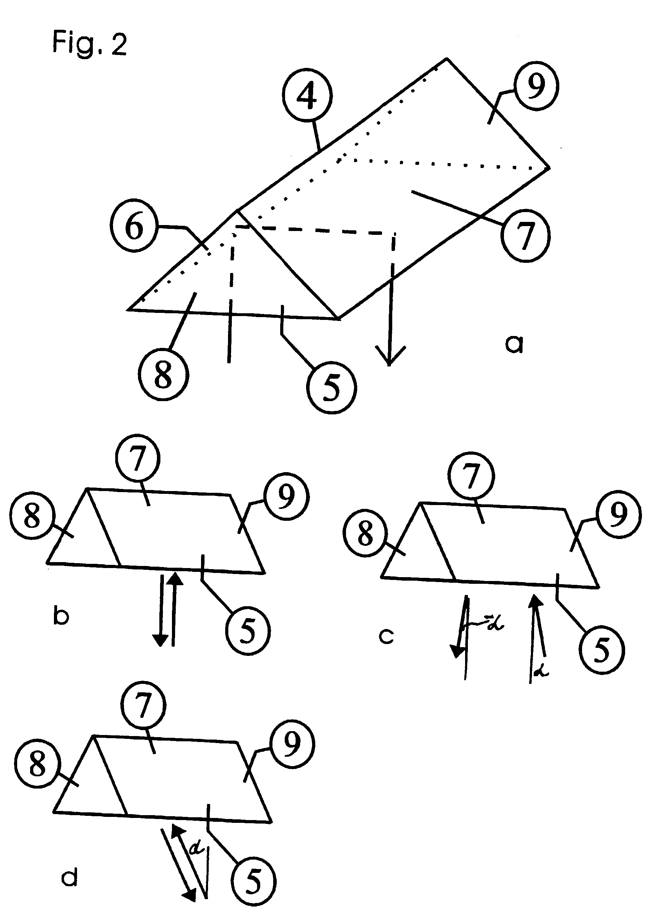

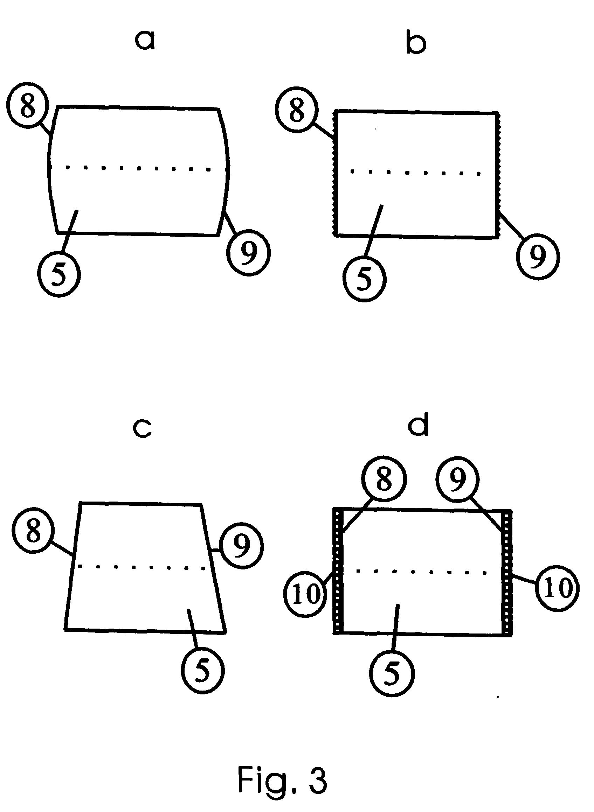

Bei dem Prisma gemäß der Figur 2a trifft das Licht senkrecht auf Grundfläche 5 und wird über die beiden Schenkelflächen 6, 7 je einmal reflektiert, so dass es parallel zum einfallenden Licht wieder über die Grundfläche 5 austritt. Um unerwünschte Reflexionen von Licht einer anderen Wellenlänge zu vermeiden, das dann ebenfalls über die Grundfläche 5 austritt und zurückgeführt wird, sind die Oberflächen der Seitenflächen 8 und 9 des Prismas 4, wie nachfolgend in der Figur 3 angedeutet, bearbeitet.

In den Figuren 2b - 2d sind zur Verdeutlichung der Funktionsweise des Prismas drei verschiedene Arbeitsmodi des optischen Spektrumanalysators dargestellt. So zeigt die Figur 2b den Durchlassbereich des optischen Spektrumanalysators, in dem das Licht gewünschter Wellenlänge parallel zum einfallenden Licht reflektiert wird und durch den Ausgangsspalt austritt. Das Licht tritt senkrecht durch die Grundfläche 5 ein, wird nacheinander an den beiden Schenkelflächen 6 und 7 je einmal reflektiert und tritt senkrecht aus der Grundfläche 5 wieder aus. Figur 2c zeigt den Sperrbereich des optischen Spektrumanalysators, in dem das Licht unerwünschter Wellenlänge, das nicht an den Seitenflächen 8, 9 reflektiert wird, nicht parallel zum einfallenden Licht reflektiert wird und nicht durch den Ausgangsspalt austritt. Das Licht tritt unter einem Winkel α durch die Grundfläche 5 ein, wird an den beiden Schenkelflächen 6 und 7 je einmal reflektiert und tritt mit einem Winkel -α aus dem Prisma, d. h. mit einem Winkelversatz von 2*α gegenüber dem einfallenden Licht, aus der Grundfläche 5 wieder aus. In dem Arbeitsmodus gemäß der Figur 2d wird das Licht, das an den Seitenflächen 8 oder 9 des Prismas 4 reflektiert wird, parallel zum einfallenden Licht reflektiert und gelangt dann zum Ausgangsspalt. Das Licht gelangt unter einem Winkel α durch die Grundfläche 5 in das Prisma, wird an den Schenkelflächen 6, 7 und der Seitenfläche 8 bzw. den Schenkelflächen 6, 7 und der Seitenfläche 9 je einmal reflektiert, wobei jede Reihenfolge der Reflexionen möglich ist. Durch die zusätzliche Reflexion an den Seitenflächen 8 bzw. 9 wird der Austrittswindel des Lichtes aus dem Prisma von -α nach α invertiert, so dass das Licht mit α aus dem Prisma tritt und so antiparallel (parallel aber mit umgekehrter Richtung) zum einfallenden Strahl läuft. Es wird somit detektiert und tritt als Geisterbild im optischen Spektrumanatysator auf.

Figur 3 zeigt die Seitenansicht auf das Prisma 4 mit Blick auf die Grundfläche 5 mit drei verschiedenen Möglichkeiten der Vermeidung der unerwünschten Reflexionen. Es zeigt Figur 3a eine Ausführungsform, bei der die Seitenflächen 8 und 9 ballig ausgeführt sind, so dass der Parallelstrahl des Lichtes, welcher auf die Seitenflächen 8 oder 9 des Prismas 4 trifft, als nichtparalleler Strahl reflektiert wird und am Ausgangsspalt stark defokussiert ist. Dadurch wird die Lichtleistung des Geisterbildes, die auf den Ausgangsspalt fokussiert ist, stark verringert. Figur 3b zeigt eine Ausführung mit aufgerauten Seitenflächen 8, 9, die eine diffuse Streuung des auf diese auftreffenden Lichtes bewirken, so dass nur ein sehr geringer Anteil des Lichtes im gleichen Winkel wie das auftreffende Licht reflektiert wird und dadurch die Lichtintensität der Geisterbilder stark vermindert wird. Bei der Ausführung gemäß der Figur 3c sind die Seitenflächen in einer beliebigen Richtung abgeschrägt, so dass das Licht, welches auf diese Seitenflächen trifft nicht parallel zum einfallenden Licht aus dem Prisma 4 austreten kann und somit nicht auf den Ausgangsspalt trifft. Bei der Ausführung gemäß Figur 3d ist auf den Seitenflächen 8, 9 eine absorbierende Schicht 10 (beispielsweise aus einem Speziallack) aufgebracht, die einen auf die Seitenflächen treffenden Lichtstrahl so weit absorbiert, dass nur noch ein sehr geringer Anteil des einfallenden Lichtes reflektiert wird. Durch die besondere Ausbildung des Prismas 4 konnte in einem optischen Spektrumanalysator basierend auf der Littman-Anordnung bei einem leicht elliptischen Lichtstrahl von ca. 12x15 mm ein Prisma verwendet werden, dessen Grundfläche in der Breite 20 mm und in der Höhe 28,2 mm betrug. Der Eintritts- bzw. der Austrittsstrahl aus dem Prisma füllte dabei im wesentlichen die obere bzw. untere Hälfte der Grundfläche 5 in der Darstellung gemäß der Figur 3 aus. Die Länge der Schenkelflächen 6 und 7 betrug ebenfalls 20 mm.

## Patentansprüche

1. Spektrumanalysator mit einem optischen Gitter und einem Prisma, das mindestens eine Eintritts- und mindestens eineAustrittsfläche für die Lichtstrahlen aufweist, bei dem nach dem ersten Gitterdurchlauf das komplette aufgefächerte optische Spektrum auf das Prisma (4) gestrahlt und das im gleichen Winkel wie das einfallende Licht zurückgestrahlte Licht einer Wellenlänge nach dem zweiten Gitterdurchlauf durch einen Spalt (1) ausgefiltert wird **dadurch gekennzeichnet**, dass die nicht für die Reflexion verwendeten Seitenflächen (8, 9) des Prismas derart ausgebildet sind, dass das auf diese Seitenflächen auftreffendes Licht nicht mit dem gleichen Winkel wie das einfallende Licht aus der Austrittsfläche (5) austritt, um einen auf den Ausgangsspalt reflektierten Lichtstrahl, bei dem unerwünschte Reflexionen an den Seitenflächen (8, 9) des Prismas (4) von Licht anderer Wellenlängen unterdrückt sind, zu erzeugen.

2. Spektrumanalysator nach Anspruch 1, **dadurch gekennzeichnet,** dass die Seitenflächen (8, 9) mit einer Oberfläche versehen sind, die eine reduzierte Reflexionsfähigkeit, eine diffuse Reflexionsfähigkeit, eine aus dem Aufbau herausführende Refiexionsfähigkeit oder eine starke Absorptionsfähigkeit aufweisen.

3. Spektrumanalysator nach Anspruch 1 oder 2, **dadurch gekennzeichnet,** dass die Größe des auf das Prisma auftreffenden Strahlendurchmessers in der Größenordnung der zur Verfügung stehenden Auftrefffläche des Prismas (4) liegt.
